(19) Europäisches Patentamt
European Patent Office
Office européen des brevets

(11) Veröffentlichungsnummer: **0 306 436 B1**

(12) # EUROPÄISCHE PATENTSCHRIFT

(45) Veröffentlichungstag der Patentschrift: **03.05.95**

(51) Int. Cl.$^6$: **C09B 67/54**, C09B 45/01

(21) Anmeldenummer: **88710024.6**

(22) Anmeldetag: **30.08.88**

Die Akte enthält technische Angaben, die nach dem Eingang der Anmeldung eingereicht wurden und die nicht in dieser Patentschrift enthalten sind.

(54) **Verfahren zur Reduzierung des Gehaltes an ionogenen Schwermetallen bei der Herstellung von Metallkomplexfarbstoffen.**

(30) Priorität: **02.09.87 DE 3729322**
**29.07.88 DE 3825815**

(43) Veröffentlichungstag der Anmeldung:
**08.03.89 Patentblatt 89/10**

(45) Bekanntmachung des Hinweises auf die Patenterteilung:
**03.05.95 Patentblatt 95/18**

(84) Benannte Vertragsstaaten:
**BE CH DE FR GB IT LI**

(56) Entgegenhaltungen:
**DE-A- 2 257 364**
**FR-A- 2 149 546**
**FR-A- 2 549 844**
**US-A- 4 329 224**

**PATENT ABSTRACTS OF JAPAN, Band 8, Nr. 241 (C-250)[1678], 6. November 1984;& JP-A-59 122 552 (MITSUBISHI KASAI) 16-07-1984**

(73) Patentinhaber: **HOECHST AKTIENGESELLSCHAFT**

**D-65926 Frankfurt (DE)**

(72) Erfinder: **Mrotzeck, Uwe, Dr.**
**Gundelhardtstrasse 2**
**D-6233 Kelkheim (Taunus) (DE)**
Erfinder: **Mischke, Peter, Dr.**
**Eichhorweg 2**
**D-6232 Bad Soden am Taunus (DE)**
Erfinder: **Schwaiger, Günther, Dr.**
**Johannesallee 41**
**D-6230 Frankfurt am Main 80 (DE)**
Erfinder: **Russ, Werner, Dr.**
**Berliner Strasse 10**
**D-6238 Hofheim am Taunus (DE)**
Erfinder: **Sittig, Manfred**
**Lessingstrasse 4**
**D-6239 Kriftel (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 306 436 B1

## Beschreibung

Die Erfindung liegt auf dem technischen Gebiet der wasserlöslichen Schwermetallkomplex-Farbstoffe.

Bei der Herstellung von Schwermetallkomplex-Farbstoffen wird zur Erzielung eines quantitativen Umsatzes im Metallierungsschritt oder auch zur Reaktionsbeschleunigung, wie bspw. bei der entmethylierenden Kupferung, das Schwermetallsalz in überschüssiger Menge eingesetzt; der Überschuß findet sich im fertiggestellten Schwermetallkomplex-Farbstoff wieder, weswegen seine färberische Anwendung mit coloristischen und ökologischen Problemen verbunden ist. Dies ist insbesondere dann der Fall, wenn die wäßrigen, nach der Synthese erhaltenen Farbstofflösungen - wie heutzutage üblich - sprühgetrocknet (eingedampft) werden. Der ionogene Schwermetallgehalt liegt dann in der Regel über 1000 ppm.

Schwermetallionen belasten jedoch wegen ihrer Toxizität die Umwelt in besonderem Maße, weil sie nicht zerstört, sondern lediglich chemisch verändert werden können, wie beispielsweise durch Umwandlung in lösliche oder unlösliche Schwermetallverbindungen oder durch Reduktion in den elementaren Zustand. Weiterhin treten anwendungstechnisch oft Probleme beim Einsatz von schwermetallhaltigen Farbstoffen bei Kombinationsfärbungen mit Farbstoffen auf, die ihrerseits beispielsweise Hydroxy-, Carboxy-, Amino-oder Thiogruppen als Substituenten tragen, welche mit den überschüssigen Metallionen unter den üblichen Färbebedingungen komplexieren, so daß die färberischen Eigenschaften dieser Farbstoffe nachteilig verändert werden können.

Versuche, den ionogenen Schwermetallgehalt in Schwermetallkomplex-Farbstoffen allein durch weitgehende Reduzierung des Metallsalzüberschusses möglichst gering zu halten, haben sich im Betrieb als nicht praktikabel erwiesen, weil die Endpunktbestimmung einer Metallierung zeitaufwendig und damit unwirtschaftlich ist.

Zur Reduzierung des ionogenen Schwermetallgehaltes im Endfarbstoff werden deshalb Verfahrensmaßnahmen bevorzugt, mit welchen die Schwermetallionen nach der Synthese des Schwermetallkomplex-Farbstoffes gravimetrisch ausgefällt und durch Filtration von der Farbstofflösung abgetrennt werden können. So verwendet man hierfür bei der Synthese von Kupferkomplex-Farbstoffen Oxalsäure. Jedoch ist die Effektivität dieser Methode auch nach Optimierung oft unbefriedigend, und bei Erhöhung der Oxalsäuremenge kann das bereits komplex-gebundene Kupfer im Endfarbstoff angegriffen und aus dem Kupferkomplex-Endfarbstoff wieder herausgelöst werden.

Auch übliche Verfahrensmaßnahmen zur Reduzierung des Schwermetallgehaltes in Abwässern, wie beispielsweise die Überführung der Schwermetallionen in deren schwerlösliche Metallsulfide durch Einleiten von Schwefelwasserstoff, wurden bisher nicht in die Herstellungsverfahren von Schwermetallkomplex-Farbstoffen integriert, weil angenommen wurde, daß das ionogene Schwermetall und das komplex-gebundene Schwermetall wegen der hohen Reaktivität des Sulfids unselektiv angegriffen werden, so daß der Metallkomplex-Farbstoff zerstört würde. Ferner ist bekannt, daß viele Farbstoffe, wie z.B. Azofarbstoffe, durch Sulfid reduziert werden können. So wird beispielsweise auch Natriumsulfid gemäß der deutschen Offenlegungsschrift Nr. 2 257 364 und ebenso Calciumsulfid gemäß der U.S.-Patentschrift Nr. 4 329 224 lediglich zur Entfernung von Schwermetallionen aus Abwässern eingesetzt. Als weiteres Mittel, Schwermetallionen aus Abwässern zu entfernen, wird gemäß der französischen Patentanmeldungs-Veröffentlichung Nr. 2 149 546A Trimercaptotriazin vorgeschlagen. Ein Verfahren, bei welchem ein nichtchemisches Mittel zur Entfernung von Schwermetallionen aus wäßrigen Lösungen dient, wird mit der französischen Patentanmeldungs-Veröffentlichung Nr. 2 549 844 vorgestellt, bei welchem Schwermetallionen aus Tinten durch Ionenaustauscher entfernt werden.

Weiterhin sind aus der Literatur aromatische Komplexbildner bekannt, die zur gravimetrischen Schwermetallbestimmung Verwendung finden. Jedoch sind viele dieser Komplexbildner betrieblich für eine Reduzierung des Schwermetallgehaltes bei der Herstellung wasserlöslicher Schwermetallkomplex-Farbstoffe nicht einsetzbar, da sie selbst nicht hinreichend wasserlöslich sind, so daß ein organisches Kosolvens erforderlich wird. Mit organischen und anorganischen Komplexierungsmitteln, wie Cyanid, kondensierten Phosphaten, Ammoniak, Thiosulfaten, Polyalkanolaminen, wie beispielsweise Triethanolamin, Polyaminen, wie beispielsweise Ethylendiamin, Polyaminopolycarbonsäuren, wie beispielsweise Ethylendiamin-tetraeesigsäure, oder Polycarbonsäuren, wie beispielsweise Weinsäure und Gluconsäure, gelingt es lediglich, Schwermetallionen in wasserlösliche Komplexe zu überführen und dadurch zu "maskieren". Ökologische Probleme bleiben durch diese Verfahrensmaßnahme weiterhin ungelöst.

Diese bekannten Verfahrensmaßnahmen sind somit unbefriedigend, um zu dem erwünschten Ziel der Reduzierung des Schwermetallgehaltes zu gelangen. Es bestand deshalb weiterhin die Aufgabe, ein Verfahren zur selektiven Entfernung von ionogenem Schwermetall aus den Syntheselösungen aufzufinden.

Mit der vorliegenden Erfindung wurde nunmehr gefunden, daß der ionogene Schwermetallgehalt bei der Synthese von wasserlöslichen Schwermetallkomplex-Farbstoffen überraschenderweise drastisch reduziert

werden kann, ohne daß komplex-gebundene Schwermetallionen des Farbstoffes signifikant angegriffen werden oder qualitätsmindernde Nebenreaktionen auftreten, wenn man die Entfernung der überschüssigen Schwermetallionen aus der Syntheselösung mit Hilfe einer der nachstehenden Verbindungen in der nachstehend angegebenen Menge oder mehrerer solcher Verbindungen durchführt.

Die Erfindung betrifft deshalb ein Verfahren zur Verminderung vom Schwermetallionen bei der Synthese von wasserlöslichen Schwermetallkomplex-Farbstoffen, das dadurch gekennzeichnet ist, daß man die Entfernung der überschüssigen Schwermetallionen aus der Syntheselösung mit Hilfe einer oder mehrerer, wie 2, 3 oder 4, Verbindungen aus der nachstehenden Gruppe von Verbindungen in der angegebenen Menge durchführt:

a) gesättigte und ungesättigte Fettsäuren mit etwa 8 bis 18 C-Atomen, bevorzugt 12 bis 18 C-Atomen, bevorzugt die gesättigten Fettsäuren, und deren wasserlöslichen Salze, bevorzugt Alkalimetallsalze, wie Natrium- und Kaliumsalze, in äquimolarer Menge zur Menge der in der Lösung vorhandenen Schwermetallionen und zusätzlich einem Überschuß von 0,01 bis 0,25 Mol, bezogen auf 1 Mol Farbstoff;

b) die Mono- und Diester der Orthophosphorsäure und deren wasserlöslichen Salze entsprechend den allgemeinen Formeln (1a) und (1b)

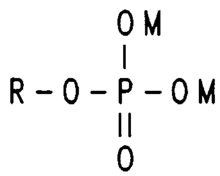 (1a) 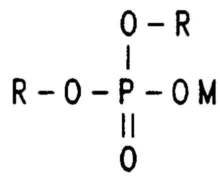 (1b)

in welchen R einen gesättigten oder ungesättigten aliphatischen Rest, bevorzugt einen Alkylrest, mit etwa 8 bis 18 C-Atomen, bevorzugt 12 bis 18 C-Atomen, bedeutet, wobei die beiden R in Formel (1b) zueinander gleich oder voneinander verschieden sein können, und M für ein Wasserstoffatom oder ein salzbildendes, Wasserlöslichkeit bewirkendes Metall steht, bevorzugt ein Alkalimetall, wie Natrium oder Kalium, ist, in äquimolarer Menge zur Menge der in der Lösung vorhandenen Schwermetallionen und zusätzlich einem Überschuß von 0,01 bis 0,3 Mol, bezogen auf 1 Mol Farbstoff;

c) aliphatische Sulfonsäuren und deren wasserlöslichen Salze entsprechend der allgemeinen Formel (2)

$R\text{-}SO_3M$ (2)

in welcher R und M die obengenannten Bedeutungen haben, in äquimolarer Menge zur Menge der in der Lösung vorhandenen Schwermetallionen und zusätzlich einem Überschuß von 0,01 bis 0,3 Mol, bezogen auf 1 Mol Farbstoff;

d) aliphatische Phosphonsäuren und deren Monoester sowie deren wasserlösliche Salze entsprechend den allgemeinen Formeln (3a) und (3b)

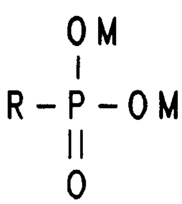 (3a) 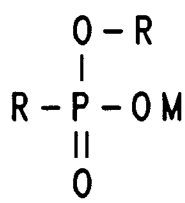 (3b)

in welchen R und M die obengenannten Bedeutungen haben, wobei die R zueinander gleiche oder voneinander verschiedene Bedeutungen besitzen können, in äquimolarer Menge zur Menge der in der Lösung vorhandenen Schwermetallionen und zusätzlich einem Überschuß von 0,01 bis 0,3 Mol, bezogen auf 1 Mol Farbstoff;

e) Malonsäure und deren wasserlöslichen Salze, insbesondere Alkalimetallsalze, wie Natrium- und Kaliumsalze, in äquimolarer Menge zur Menge der in der Lösung vorhandenen Schwermetallionen und zusätzlich einem Überschuß von 0,01 bis 0,3 Mol, bezogen auf 1 Mol Farbstoff;

f) Trimercapto-s-triazin, 2-Amino-benzoesäure, 8-Hydroxy-chinolin und die wasserlöslichen Salze dieser Verbindungen, insbesondere deren Alkalimetallsalze, bevorzugt Natriumsalze, in äquimolarer Menge zur

Menge der in der Lösung vorhandenen Schwermetallionen und zusätzlich einem Überschuß von 0,01 bis 0,25 Mol, bezogen auf 1 Mol Farbstoff;

g) wasserlösliche Sulfide, insbesondere Alkalimetallsulfide, bevorzugt Natriumsulfid, in äquimolarer Menge zur Menge der in der Lösung vorhandenen Schwermetallionen und zusätzlich einem Überschuß von 0,01 bis 0,1 Mol, bezogen auf 1 Mol Farbstoff.

Die Entfernung der freien Schwermetallionen aus den wäßrigen Farbstofflösungen, wie beispielsweise von Eisen-, Nickel-, Kobalt-, Chrom- und Kupferionen, insbesondere Nickel- und Kupferionen, erfolgt mittels der erfindungsgemäß verwendeten Verbindungen durch Überführung in deren wasserunlöslichen Verbindungen, die aus den wäßrigen Farbstofflösungen ausfallen und hieraus leicht abgetrennt werden können, bspw. durch Filtration oder Zentrifugieren, gegebenenfalls nach Zusatz eines üblichen Klärhilfsmittels, wie Aktivkohle oder Kieselgur. Die Farbstofflösung liegt dann weitgehend schwermetallsalzfrei vor und kann entsprechend der für den jeweiligen Farbstoff bestehenden Herstellungsvorschrift weiter aufgearbeitet werden. In der Regel läßt sich der ionogene Metallgehalt der Farbstofflösung mit der erfindungsgemäßen Maßnahme auf unter 20 ppm reduzieren.

Im allgemeinen nimmt man die Fällung in einem pH-Bereich von 2 bis 10, bevorzugt von 4 bis 7, vor, wobei der bevorzugte pH-Bereich auch für Schwermetallkomplex-Farbstoffe mit faserreaktiven Gruppen günstig und unschädlich ist. Die Effektivität der erfindungsgemäß zur Fällung von Schwermetallionen aus den Farbstofflösungen verwendeten Verbindungen ist unabhängig oder nur unwesentlich abhängig davon, ob diese in Form ihrer Säuren oder in Form ihrer Salze eingesetzt werden, weil sich deren Verhältnis durch den pH-Wert der Lösung reguliert. In der Regel nimmt die Effektivität der Fällung mit steigendem pH-Wert zu. Vorteilhaft kontrolliert man den gewünschten oder erforderlichen pH-Bereich der Fällung mit Hilfe von üblichen Puffersubstanzen, wie beispielsweise Alkaliformiate, -acetate, -hydrogenphosphate, -hydrogencarbonate, -carbonate, -propionate und -tartrate als korrespondierende Basen des Puffersystems. Für den schwach sauren pH-Bereich ist insbesondere der übliche Essigsäure-/Alkalimetallacetat-Puffer von Vorteil.

Die erfindungsgemäße Entfernung (Fällung) der Schwermetallionen, wie insbesondere der $Cu^{2(+)}$-Ionen, aus den Syntheselösungen der Schwermetallkomplex-Farbstoffe, bevorzugt Kupferkomplex-Farbstoffe, erfolgt mit den Verbindungen von Abschnitten a) bis g) in der Regel bei einer Temperatur zwischen 10 und 100 ° C und bevorzugt bei einer Temperatur zwischen 50 und 90 ° C.

Die Verbindungen a) bis g) können den Farbstofflösungen in fester (pulverisierter) Form oder in Form einer wäßrigen Suspension oder einer wäßrigen Lösung, die bei schlechtlöslichen Fällungsmitteln bevorzugt eine Temperatur von 50 bis 90 ° C besitzt, zugesetzt werden.

Das zugesetzte Fällungsreagenz wird gemäß den obigen Angaben in einer solchen Menge eingesetzt, die auf den Überschuß an Schwermetallionen abgestimmt ist. Jedoch ist es zweckmäßig, wie oben angegeben, zur vollständigen Fällung der überschüssigen Schwermetallionen zusätzlich zur theoretisch notwendigen und vom ionogenen Schwermetallgehalt der Farbstofflösung abhängigen Menge an Fällungsreagenz einen Überschuß einzusetzen. Dazu wird zunächst der ionogene Schwermetallgehalt der metallierten Farbstofflösung mit üblichen analytischen Methoden bestimmt, wie beispielsweise photometrisch, potentiometrisch oder mittels Atomabsorptionsspektroskopie. Wenn lediglich die theoretisch notwendige Menge an den unter den Abschnitten a) bis g) aufgeführten Fällungsmitteln eingesetzt wird, wie beispielsweise pro Mol Schwermetallionen 1 Mol Sulfid oder 2 Mol 2-Aminobenzoesäure oder 2/3 Mol Trimercapto-s-triazin, dann reduziert sich der ionogene Schwermetallgehalt der Farbstofflösung zwar deutlich, jedoch liegt er in der Regel über 20 ppm.

Um eine noch effektivere Reduzierung des ionogenen Schwermetallgehaltes zu erreichen, kann man das Fällungsmittel in dem oben angegebenen Überschuß einsetzen, der sich auf den Farbstoffgehalt der Farbstofflösung bezieht, wobei, wie oben angegeben, die überschüssige Einsatzmenge abhängig vom verwendeten Fällungsmittel, von der Komplexstabilität des Farbstoffes und vom Bestreben des Farbstoffes, mit dem Fällungsmittel unerwünschte Nebenreaktionen einzugehen, ist. Die effektiv wirkende Menge an Überschuß an dem Fällungsmittel läßt sich jedoch leicht durch Vorversuche ermitteln. Ein zu großer Überschuß sollte allerdings vermieden werden, um unerwünschte Nebenreaktionen zu vermeiden.

Nach der Fällung der Schwermetallionen ist es vorteilhaft, vor Abtrennung der ausgefallenen Schwermetallverbindungen die Reaktionslösung auf Raumtemperatur abzukühlen, um eine möglichst vollständige Fällung und Abtrennung zu erzielen, weil die Löslichkeit der gebildeten Schwermetallverbindungen bei Raumtemperaturen geringer ist als in der Wärme.

Gesättigte und ungesättigte Fettsäuren (bzw. deren Salze), die erfindungsgemäß zur Anwendung gelangen, sind insbesondere Stearinsäure, Palmitinsäure, Myristinsäure, Laurinsäure, Caprinsäure, Octansäure, Isodecansäure, Isononansäure, 2-Ethylhexansäure und Ölsäure, bevorzugt in Form ihrer Natriumsalze. Insbesondere bevorzugt sind Stearinsäure und Natriumstearat zu nennen.

Für die unter b), c) und d) aufgeführten Verbindungen sind insbesondere solche geeignet, in denen R den Stearyl-, Palmityl-, Myristyl-, Lauryl-, Decyl-, Octyl-, Isodecyl-, Isononyl-, 2-Ethyl-hexyl- oder Oleyl-Rest bedeutet. Von den Verbindungen unter b) sind insbesondere Gemische, bevorzugt aus etwa gleichen Teilen, wie beispielsweise im Gewichtsverhältnis von 60:40 bis 40:60 Teilen, der Mono- und Dilaurylester der Orthophosphorsäure, bzw. deren Alkalimetallsalze, wie Natriumsalze, hervorzuheben; die in wäßrigem Medium üblicherweise auftretende Hydrolyse der Phosphorsäureester bzw. der Alkanphosphonsäuremonoester kann innerhalb des pH-Bereiches von 4 bis 8, bei welchem die Fällungsreaktion des Schwermetalles aus der wäßrigen Farbstoffsyntheselösung in der Regel erfolgt, vernachlässigt werden.

Die spezifische Abtrennung von Schwermetallionen in erfindungsgemäßer Weise kann in die Herstellungsverfahren aller wasserlöslichen Schwermetallkomplex-Farbstoffe integriert werden, sofern die Schwermetallkomplex-Bindung im Farbstoff hinreichend stabil ist. Schwermetallkomplex-Farbstoffe, die hierfür besonders geeignet sind, sind die Schwermetallkomplex-Farbstoffe, insbesondere die 1:1-Kupfer-, 1:2-Kobalt-, 1:2-Chrom- sowie die Nickel- und Eisenkomplex-Verbindungen, der Mono-, Dis- und Trisazofarbstoffe, hiervon bevorzugt die 1:1-Kupferkomplex-Mono- und -Disazofarbstoffe, desweiteren die Schwermetallkomplex-Farbstoffe vom Typ der Azomethine und Formazane, insbesondere von carbo-aromatischen oder hetero-aromatischen 1,5-Diaryl-Formazanen mit dem Strukturelement der allgemeinen Formel (4)

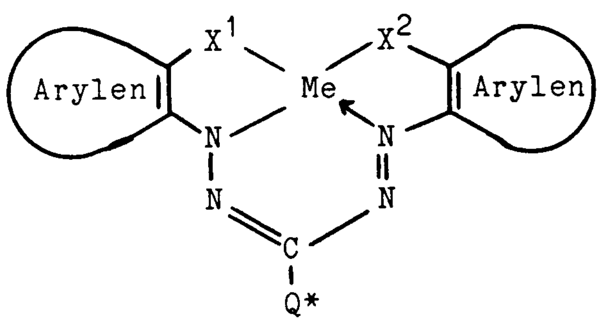

(4)

in welcher "Arylen" einen gegebenenfalls substituierten Arylenrest bedeutet, Q* für ein Wasserstoffatom, einen gegebenenfalls substituierten Aryl- oder Alkylrest oder einen gegebenenfalls substituierten heterocyclischen Rest oder für einen Acylrest steht oder ein Halogenatom, die Cyan- oder Nitrogruppe ist, Me ein Schwermetallatom, vorzugsweise hier das Kupferatom, ist und $X^1$ und $X^2$, zueinander gleich oder voneinander verschieden, jedes eine das Schwermetall komplex bindende Oxy-, Amino-, Alkylamino-, Arylamino-, Sulfo- oder Carbonyloxygruppe bedeutet,
desweiteren tetracyclische Schwermetallkomplex-Farbstoffe mit dem Strukturelement entsprechend der allgemeinen Formel (5)

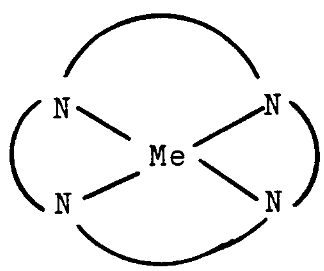

(5)

in welcher Me für das Schwermetall-Zentralatom, vorzugsweise hier das Kupfer-, Nickel-, Kobalt- oder Eisen-Zentralatom, steht, wie insbesondere die Phthalocyanin-Schwermetallkomplex-Farbstoffe dieser Schwermetalle, insbesondere die Kupferkomplex- und Nickelkomplex-Phthalocyanin-Farbstoffe.

Solche Farbstoffe sind beispielsweise insbesondere Farbstoffe entsprechend der allgemeinen Formeln (6a), (6b), (6c), (6d) und (6e)

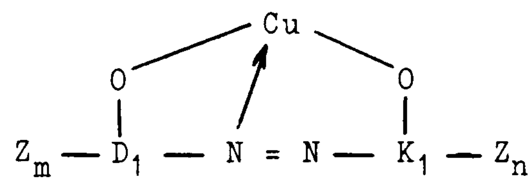

(6a)

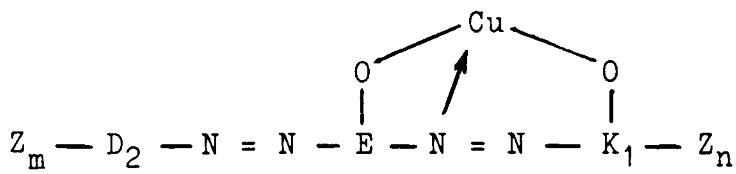

(6b)

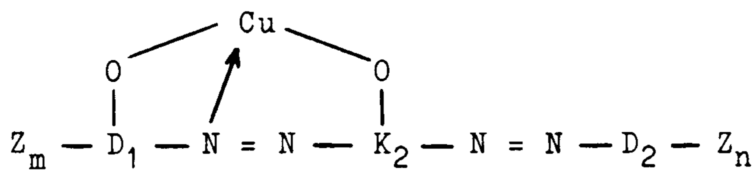

(6c)

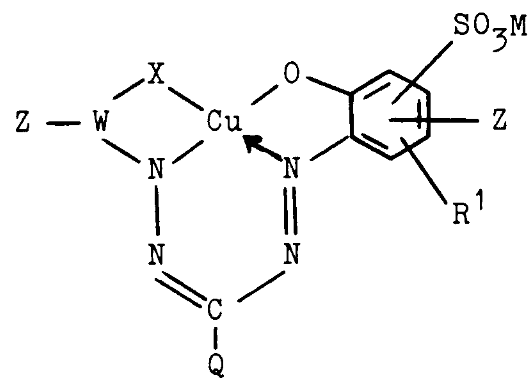

(6d)

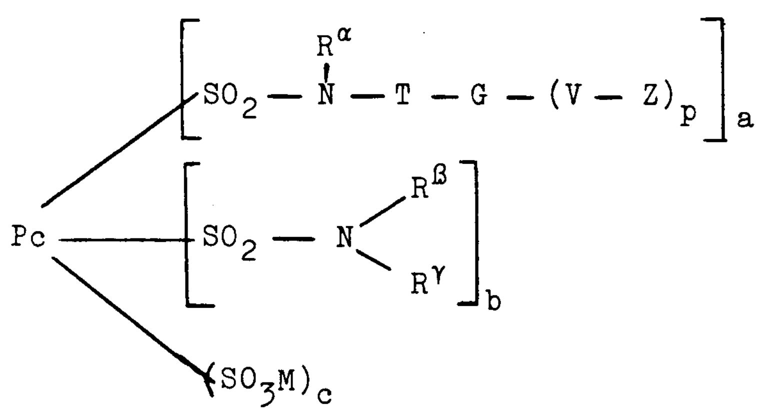

(6e)

worin bedeuten:

$D_1$ ist ein Benzolring, der durch 1, 2 oder 3 Substituenten substituiert sein kann, die der Gruppe niederes Alkyl, niederes Alkoxy, Carboxy, niederes Alkanoylamino, Benzoylamino, Phenylamino, Sulfobenzoylamino, Sulfophenylamino, Carbamoyl, durch niederes Alkyl

und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder

$D_1$ ist ein Naphthalinring, der durch 1, 2 oder 3 Sulfogruppen und/oder eine Carboxy-, Methyl-, Methoxy-, Ethoxy-, Nitro- oder Acetylaminogruppe oder ein Chloratom substituiert sein kann,

wobei in $D_1$ das komplexbildende Sauerstoffatom orthoständig zur Azogruppe gebunden ist;

$D_2$ hat eine der für $D_1$ genannten Bedeutungen oder ist der Benzthiazol-2-yl-Rest, an dessen Benzolkern die Gruppe Z gebunden ist und der durch eine Nitro-, Methyl-, Methoxy- oder Sulfogruppe substituiert sein kann;

$K_1$ ist ein Naphthalinring, der durch 1, 2 oder 3 Sulfogruppen und/oder eine Amino-, Methylamino-, Phenylamino-, niedere Alkanoylamino-, Benzoylamino- oder N-Methyl-N-acetylamino-Gruppe substituiert sein kann, oder

$K_1$ ist der Rest des Pyrazol-4,5-ylens, der in 3-Stellung durch Methyl, Carboxy, Carbamoyl, niederes Carbalkoxy, wie Carbomethoxy und Carbethoxy, oder Phenyl substituiert ist und in 1-Stellung einen Phenyl- oder Naphthylrest gebunden enthält, wobei der Phenylrest durch 1 oder 2 Sulfogruppen und/oder 1 oder 2 Substituenten aus der Gruppe niederes Alkyl, niederes Alkoxy, Chlor, Brom, Nitro, Acetylamino und Carboxy und der Naphthylrest durch 1, 2 oder 3 Sulfogruppen und/oder einen Substituenten aus der Gruppe niederes Alkyl, niederes Alkoxy, Nitro, Acetylamino und Carboxy substituiert sein können, oder

$K_1$ ist als Rest einer Kupplungskomponente der des Acetoacetylanilids oder -naphthylamids, wobei der Phenylrest durch 1 oder 2 Substituenten, die der Gruppe niederes Alkyl, niederes Alkoxy, Carboxy, Acetylamino, Benzoylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, und der Naphthylrest durch 1, 2 oder 3 Sulfogruppen und/oder einen Substituenten aus der Gruppe niederes Alkyl, niederes Alkoxy, Nitro, Acetylamino und Carboxy substituiert sein können,

wobei in $K_1$ das komplexbildende Sauerstoffatom ortho-ständig zur Azogruppe gebunden ist;

$K_2$ steht als Rest einer bifunktionellen Aminonaphthol-Kupplungskomponente für den Naphthylenrest, der eine oder zwei Sulfogruppen gebunden enthalten kann;

Z ist ein Wasserstoffatom oder bevorzugt die $\beta$-Hydroxyethylsulfonyl-Gruppe oder bevorzugt eine faserreaktive Gruppe, die mit carbonamid- und/oder hydroxygruppen-haltigem Material, insbesondere Fasermaterial, eine kovalente Bindung einzugehen vermag, wie insbesondere eine faserreaktive Gruppe aus der Chlortriazinylamino-, Fluortriazinylamino- oder Vinylsulfonyl-Reihe, wie beispielsweise die Vinylsulfonylgruppe oder eine Gruppe der allgemeinen Formel (7a)

$$-CH_2-CH_2-Z^1 \qquad (7a)$$

in welcher

$Z^1$ ein alkalisch eliminierbarer Substituent ist, wie beispielsweise ein Chloratom, die Acetyloxy-, Thiosulfato-, Phosphato- und insbesondere Sulfatogruppe,

oder wie beispielsweise eine faserreaktive Gruppe entsprechend der allgemeinen Formel (7b)

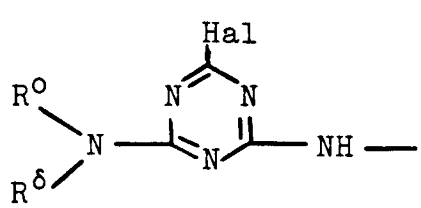

(7b)

in welcher

Hal für ein Chlor- oder Fluoratom steht,

$R^o$ eine gegebenenfalls substituierte niedere Alkylgruppe, wie beispielsweise eine durch Hydroxy, Cyano, Carboxy, Sulfo, Phosphato, Sulfato oder Phenyl substituierte Alkylgruppe von 1 bis 4 C-Atomen, oder ein Phenyl- oder Naphthylrest ist, die durch Substituenten aus der Gruppe Carboxy, Sulfo, Chlor, Brom, Methyl, Ethyl, Methoxy, Ethoxy, Nitro, Vinylsulfonyl und einer Gruppe der obengenannten und definierten allgemeinen Formel (7a) substituiert sein kann und

$R^\delta$ ein Wasserstoffatom oder eine gegebenenfalls substituierte niedere Alkylgruppe ist, wie beispielsweise eine durch Hydroxy, Cyano, Carboxy, Sulfo, Sulfato, Phosphato oder Phenyl substituierte Alkylgruppe von 1 bis 4 C-Atomen;

m ist die Zahl 1 oder 2, bevorzugt 1, und

n ist die Zahl 1 oder 2, bevorzugt 1,

wobei die Summe (m + n) höchstens die Zahl 3 ist;

E stellt als Mittelkomponente, die beim Aufbau der Farbstoffe zuerst als Kupplungskomponente, dann als Diazokomponente diente, den Benzolkern dar, der durch 1 oder 2 Substituenten aus der Gruppe niederes Alkyl, niederes Alkoxy, Chlor, Acetylamino, Dimethylamino, Diethylamino, Ureido und Phenylureido substituiert sein kann, oder den Naphthalinkern dar, der durch niederes Alkyl, Nitro, Acetylamino oder Sulfo substituiert sein kann, oder

E ist ein Rest der allgemeinen Formel (8)

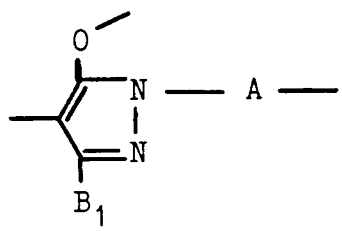

(8)

in welcher

$B_1$ für die Methyl- oder Carboxygruppe steht und

A einen Benzol- oder Naphthalinkern bedeutet, der durch 1 oder 2 Substituenten aus der Gruppe Sulfo, Carboxy, niederes Alkyl, niederes Alkoxy und Chlor substituiert sein kann;

M ist ein Wasserstoffatom oder ein Alkalimetall, wie Natrium, Kalium und Lithium;

W ist ein Benzol- oder Naphthalinring, die beide durch Substituenten, vorzugsweise 1 oder 2 Substituenten, aus der Gruppe Halogen, wie Fluor, Chlor und Brom, Nitro, niederes Alkyl, wie Isopropyl, tert.-Butyl, tert.-Amyl oder Isobutyl, insbesondere Methyl und Ethyl, Alkoxy von 1 bis 4 C-Atomen, wie Methoxy und Ethoxy, Alkylsulfonyl von 1 bis 4 C-Atomen, wie Methylsulfonyl und Ethylsulfonyl, Phenylsulfonyl, Sulfamoyl, N-Mono- und N,N-Dialkylsulfamoyl mit jeweils 1 bis 4 C-Atomen im Alkyl substituiert sein können;

Q ist eine gerad- oder verzweigt-kettige Alkylgruppe von 1 bis 8 C-Atomen, wie die Methyl-, Ethyl-, Isopropyl-, n-Butyl-, sek.-Butyl-, tert.-Butyl-, n-Heptyl- oder n-Octylgruppe, oder eine gerad- oder verzweigt-kettige Alkenylgruppe von 2 bis 8 C-Atomen, wie die Allylgruppe, wobei diese Alkyl- und Alkenylgruppen noch durch den Phenylrest substituiert sein können, der wiederum durch Substituenten aus der Gruppe Methyl, Ethyl, Methoxy, Ethoxy, Fluor, Chlor, Brom und Sulfamoyl substituiert sein kann, oder ist ein Phenyl- oder Naphthylrest, die durch Substituenten, vorzugsweise 1 oder 2 Substituenten, aus der Gruppe Hydroxy, Nitro, Halogen, wie Fluor, Brom und Chlor, niederes Alkyl, niederes Alkoxy, Carbalkoxy mit 1 bis 4 C-Atomen im Alkylrest, wie Carbomethoxy und Carbethoxy oder eine Gruppe Z substituiert sein können, oder ist der Rest des Furans, Thiophens, Pyrrols, Imidazols, Indols, Pyrazols, Pyridins, Pyrimidins, Chinolins oder Benzimidazols, wobei diese heterocyclischen Reste an den aromatischen Kohlenstoffatomen durch Chlor, Phenyl, Methoxy, Ethoxy, Methyl und Ethyl und die Stickstoffatome in den NH-Gruppen dieser Heterocyclen durch Methyl, Ethyl und Benzyl substituiert sein können, oder ist ein Wasserstoffatom;

X ist ein Sauerstoffatom oder eine Carbonyloxygruppe der Formel -CO-O- , die in ortho-Stellung zum Stickstoffatom an W gebunden sind, oder X ist eine Sulfogruppe;

| | |
|---|---|
| $R^1$ | ist ein Wasserstoffatom oder eine niedere Alkylgruppe, eine niedere Alkoxygruppe, ein Chlor- oder Bromatom, eine niedere Alkanoylaminogruppe, wie eine Acetylaminogruppe oder eine Sulfogruppe; |
| Pc | ist der Rest eines metallhaltigen Phthalocyanins, wie beispielsweise des Kupfer-, Kobalt- oder Nickelphthalocyanins, wobei der Phthalocyaninrest noch in den 3- und/oder 4-Stellungen der carbocyclischen aromatischen Ringe des Phthalocyanins substituiert sein kann, wie beispielsweise durch Halogenatome, wie Chloratome, oder Arylreste, wie Phenylreste, und in welchem die Sulfochlorid-, Sulfonamid- und/oder Sulfogruppen in den 3- und/oder 4-Stellungen der carbocyclischen aromatischen Ringe des Phthalocyanins gebunden sind; |
| $R^{\alpha}$ | ist ein Wasserstoffatom oder eine gegebenenfalls substituierte niedere Alkylgruppe, wie beispielsweise eine durch Hydroxy, Cyano, Carboxy, Sulfo, Sulfato, Phosphato oder Phenyl substituierte Alkylgruppe von 1 bis 4 C-Atomen; |
| $R^{\beta}$ | ist ein Wasserstoffatom oder eine niedere Alkylgruppe, die substituiert sein kann, wie beispielsweise durch Hydroxy, Carboxy, Acetyloxy, Sulfato, Sulfo, Phosphato, Phenyl und Sulfophenyl, oder ist Cyclohexyl; |
| $R^{\gamma}$ | ist ein Wasserstoffatom oder eine niedere Alkylgruppe, die substituiert sein kann, wie beispielsweise durch Hydroxy, Sulfo, Carboxy, Sulfato, Phosphato, Acetyloxy, Phenyl und Sulfophenyl, oder ist ein Phenyl oder Naphthylrest, der substituiert sein kann, beispielsweise durch niederes Alkyl, niederes Alkoxy, Chlor, Carboxy und Sulfo, oder |
| $R^{\beta}$ und $R^{\gamma}$ | bilden gemeinsam mit dem Stickstoffatom und einem Alkylenrest von 3 bis 8 C-Atomen, bevorzugt 4 bis 6 C-Atomen, oder mit einem weiteren Heteroatom, wie einem Stickstoffatom oder einem Sauerstoffatom, und zwei niederen Alkylenresten den Rest eines 4- bis 8-gliedrigen heterocyclischen Rings, wie beispielsweise den Piperidino-, Piperazino- oder Morpholino-Rest; |
| G | ist ein aromatischer carbocyclischer oder aromatischer heterocyclischer Rest, bevorzugt ein gegebenenfalls substituierter Phenylen- oder Naphthylenrest, insbesondere ein Phenylen- oder Naphthylenrest, deren Substituenten bevorzugt aus der Gruppe niederes Alkyl, niederes Alkoxy, Halogen, wie Chlor und Brom, Carboxy, Nitro und Sulfo ausgewählt sind; |
| T | ist eine direkte Bindung oder ein zweiwertiges organisches Bindeglied, wie beispielsweise ein Alkylenrest von 1 bis 6 C-Atomen oder eine Alkylenaminogruppe mit einem Alkylrest von 1 bis 6 C-Atomen, wobei deren Aminogruppe noch durch einen gegebenenfalls substituierten niederen Alkylrest, bspw. den obengenannten Rest, substituiert sein kann, oder beispielsweise ein Rest der Formel |

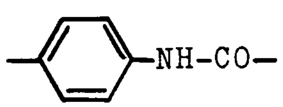 , 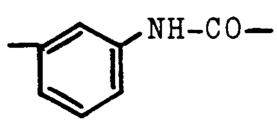 , 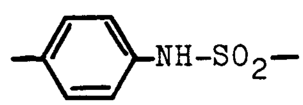 ,

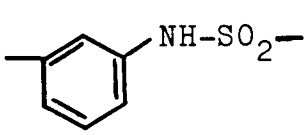 , 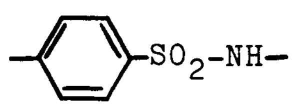 , 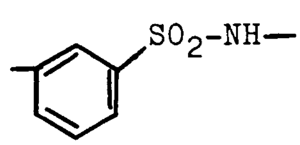 ,

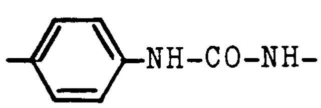 , 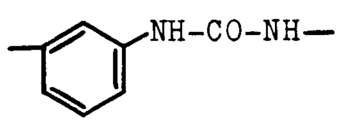 oder 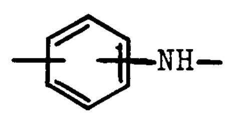 ,

hiervon bevorzugt ein Rest der Formel

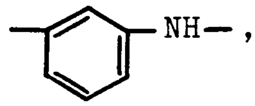

$-(CH_2)_k-$ oder

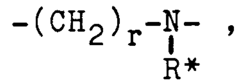

in welchen

- k eine ganze Zahl von 1 bis 5,
- r eine ganze Zahl von 2 bis 6 und
- R* ein Wasserstoffatom oder eine Alkylgruppe von 1 bis 5 C-Atomen bedeutet,

oder

- T bildet zusammen mit der Gruppe $-N(R^{\alpha})-$ einen Rest der allgemeinen Formel

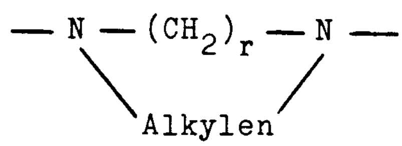

in welchem

- r die obengenannte Bedeutung hat und Alkylen einen niederen Alkylenrest darstellt;
- V ist eine direkte Bindung oder eine Gruppe der Formel $-CH_2-$ , $-CH_2-CH_2-$

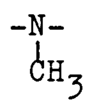 oder 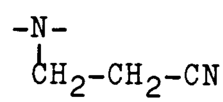 ;

,

- p ist die Zahl 1 oder 2;
- a ist eine ganze Zahl von 1 bis 4;
- b ist eine ganze Zahl von Null bis 3;
- c ist eine ganze Zahl von Null bis 3, wobei a, b und c gleich oder verschieden voneinander sein können, jedoch die Summe von (a + b + c) höchstens 4 ist.

In den obigen und nachstehenden Angaben bedeutet niederes Alkyl eine Alkylgruppe von 1 bis 5 C-Atomen, insbesondere von 1 bis 4 C-Atomen, wie bevorzugt die Methyl- oder Ethylgruppe. Niederes Alkoxy bedeutet eine Alkoxygruppe von 1 bis 5 C-Atomen, insbesondere von 1 bis 4 C-Atomen, bevorzugt die Methoxy- oder Methoxygruppe, und niederes Alkanoylamino bedeutet eine Alkanoylaminogruppe mit einem Alkylrest von 1 bis 4 C-Atomen, bevorzugt die Propionylamino- und insbesondere die Acetylaminogruppe.

In den Formeln (6a) und (6c) bedeutet die Gruppierung entsprechend der allgemeinen Formel (9a)

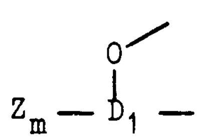 (9a)

bevorzugt einen Rest der allgemeinen Formel (10a) oder (10b)

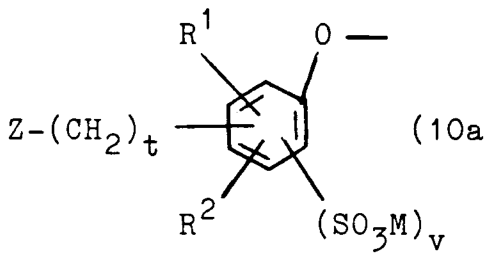
(10a)

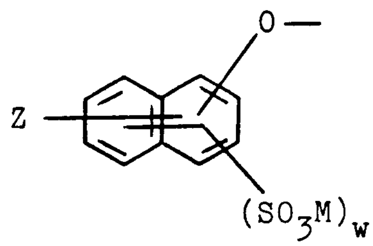
(10b)

in welchen

| | |
|---|---|
| Z und M | die obengenannten Bedeutungen haben, |
| t | die Zahl Null, 1, 2, 3 oder 4 bedeutet, |
| v | die Zahl Null oder 1 ist (wobei im Falle v = Null diese Gruppe für ein Wasserstoffatom steht) und |
| w | die Zahl 1, 2 oder 3 bedeutet sowie |
| $R^2$ | ein Wasserstoffatom, eine niedere Alkylgruppe, eine niedere Alkoxygruppe, ein Chlor- oder Bromatom ist. |

In den Formeln (6a) und (6b) bedeutet die Gruppierung entsprechend der allgemeinen Formel (9b)

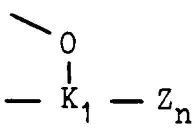
(9b)

bevorzugt einen Rest der allgemeinen Formeln (11a) bis (11e)

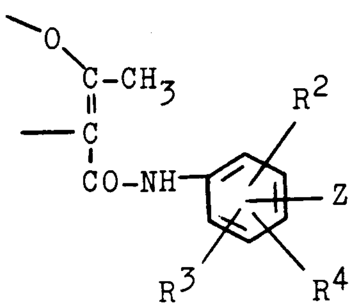
(11a)

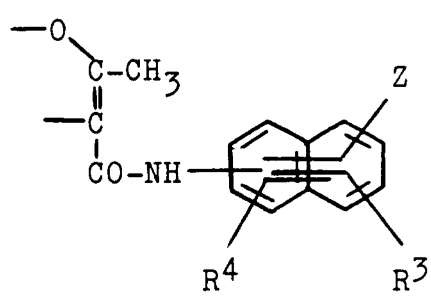
(11b)

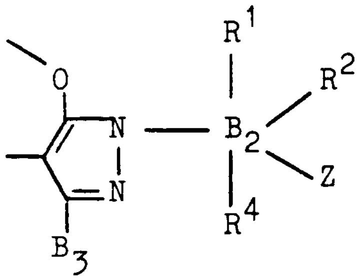

(11c)

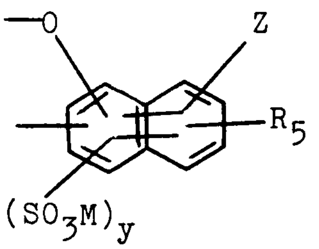

(11d)

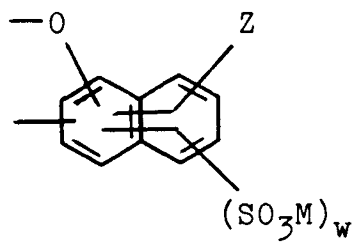

(11e)

in welchen

| | |
|---|---|
| Z, M, $R^1$, $R^2$ und w | die obengenannten Bedeutungen haben, |
| $R^3$ | ein Wasserstoffatom, eine niedere Alkylgruppe,eine niedere Alkoxygruppe, ein Chlor- oder Bromatom oder eine Sulfogruppe ist, |
| $R^4$ | ein Wasserstoffatom, eine niedere Alkylgruppe oder eine Sulfogruppe ist, |
| $R^5$ | eine niedere Alkanoylaminogruppe oder eine Benzoylaminogruppe, die durch eine Sulfogruppe oder eine $\beta$-Chlorethylsulfonyl-Gruppe substituiert sein kann, ist, |
| $B_2$ | ein Benzol- oder Naphthalinring bedeutet, |
| $B_3$ | eine niedere Alkylgruppe, bevorzugt die Methylgruppe, eine Carboxygruppe, eine Carbomethoxygruppe, eine Carbethoxygruppe oder der Phenylrest ist und |
| y | für die Zahl Null oder bevorzugt 1 oder 2 steht (wobei hier im Falle y gleich Null diese Gruppe ein Wasserstoffatom bedeutet) |

Von diesen Farbstoffen sind für das erfindungsgemäße Verfahren beispielsweise synthetisierte Farbstoffe von besonderem Interesse, die den allgemeinen Formeln (12a), (12b), (12c) und (12d) entsprechen:

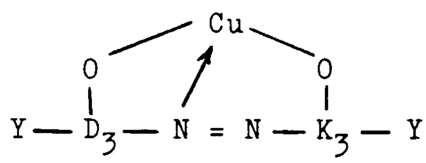

(12a)

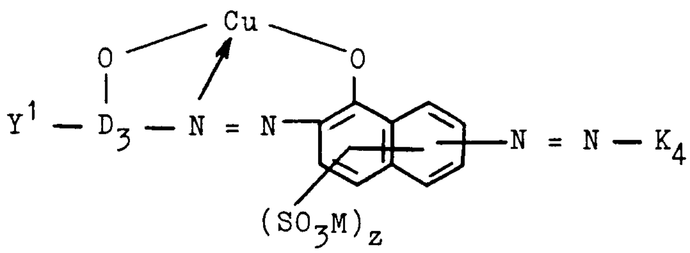

(12b)

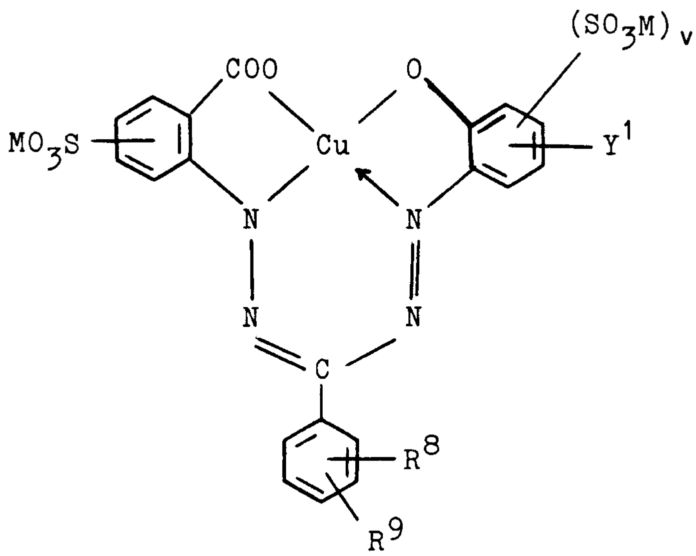

(12c)

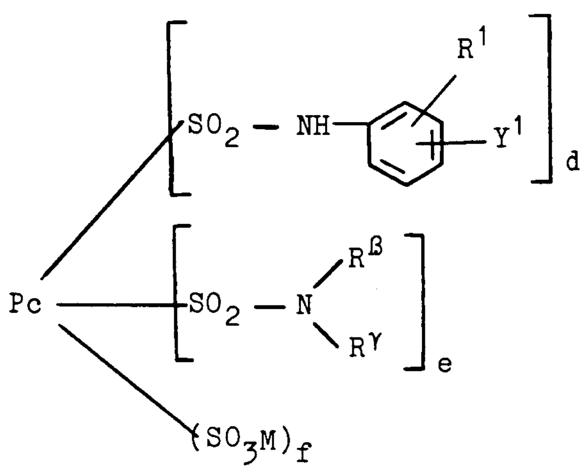

(12d)

worin bedeuten:

Y ist ein Wasserstoffatom oder eine Vinylsulfonylgruppe oder eine Gruppe der obengenannten und definierten allgemeinen Formel (7a), wobei mindestens eines der beiden Y eine Vinylsulfonylgruppe oder eine Gruppe der allgemeinen Formel (7a) bedeutet;

$Y^1$ ist die Vinylsulfonylgruppe oder eine Gruppe entsprechend der obengenannten und definierten

allgemeinen Formel (7a);

$D_3$ ist ein Benzol- oder Naphthalinring, die beide durch eine Nitrogruppe oder eine niedere Alkoxygruppe, wie Methoxygruppe, oder ein Chloratom und/oder 1 oder 2 Sulfogruppen substituiert sein können;

$K_3$ ist ein Naphthalinring, der durch 1 oder 2 Sulfogruppen substituiert ist und zusätzlich durch eine Acetylamino-oder Benzoylaminogruppe substituiert sein kann, wobei die das Kupferatom komplex-bindende Oxygruppe an den Naphthalinrest in ortho-Stellung zur Azogruppe gebunden ist, oder $K_3$ ist der Pyrazol-4,5-ylen-Rest, an dem die Oxygruppe in 5-Stellung steht und die Azogruppe in 4-Stellung und der in 3-Stellung durch die Carbomethoxy-oder Carbethoxy- oder bevorzugt die Carboxygruppe oder Methylgruppe substituiert ist und der in 1-Stellung durch einen Naphthyl- oder bevorzugt Phenylrest substituiert ist, wobei die Naphthyl- und Phenylreste durch 1, 2 oder 3 Substituenten aus der Gruppe Methoxy, Ethoxy, Chlor, Brom, Methyl und Sulfo substituiert sein können, wobei die gegebenenfalls faserreaktive Gruppe Y an $K_3$ im Falle des Pyrazolonrestes an diesen 1-ständigen Phenyl- oder Naphthylrest gebunden ist;

$K_4$ ist ein Naphtholrest, der durch 1 oder 2 oder 3 Sulfogruppen und gegebenenfalls zusätzlich durch eine Acetylamino- oder Benzoylaminogruppe substituiert sein kann, oder ist ein 3-Methyl- oder 3-Carboxy-pyrazol-5-on-4-yl-Rest, der in 1-Stellung durch einen Phenyl- oder Naphthylrest substituiert ist, der durch 1, 2 oder 3 Substituenten aus der Gruppe Methoxy, Ethoxy, Methyl, Ethyl, Carboxy, Sulfo und Chlor, bevorzugt 1 oder 2 Sulfogruppen, substituiert sein kann;

M hat die obengenannte Bedeutung;

z ist die Zahl 1 oder 2;

v ist die Zahl Null oder 1 (wobei im Falle v gleich Null diese Gruppe ein Wasserstoffatom bedeutet);

$R^8$ ist ein Wasserstoffatom oder ein Chloratom oder eine Sulfogruppe;

$R^9$ ist ein Wasserstoffatom oder eine Sulfogruppe;

$R^1$ hat die obengenannte Bedeutung;

Pc ist der Rest des Nickel- oder Kupferphthalocyanin-Moleküls;

$R^\beta$ ist ein Wasserstoffatom oder eine Methyl- oder Ethylgruppe, die durch eine Hydroxy-, Carboxy- oder Sulfogruppe substituiert sein kann;

$R^\gamma$ ist ein Wasserstoffatom oder eine Methyl- oder Ethylgruppe, die durch eine Hydroxy-, Carboxy- oder Sulfogruppe substituiert sein kann;

d ist eine ganze oder gebrochene Zahl zwischen 1 und 2,5;

e ist eine ganze oder gebrochene Zahl zwischen 0 und 1,5;

f ist eine ganze oder eine gebrochene Zahl zwischen 0,5 und 2;

die Summe (d + e + f) ist eine ganze oder gebrochene Zahl zwischen 2,2 und 4.

Zur Minimierung des Kupferionengehaltes von synthetisierten Kupferkomplex-Azofarbstoffen gemäß dem erfindungsgemäßen Verfahren sind ebenfalls die synthetisierten Farbstoffe entsprechend der allgemeinen Formel (12e) von besonderem Interesse:

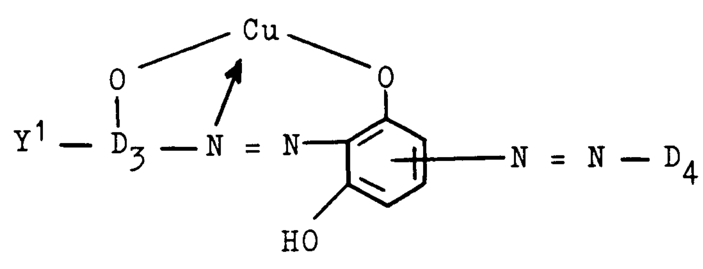

(12e)

in welchen $Y^1$ und $D_3$ die obengenannten Bedeutungen haben und

$D_4$ ein Phenylrest ist, der durch 1, 2 oder 3 Substituenten aus der Gruppe Methyl, Ethyl, Methoxy, Ethoxy, Chlor, Brom, Carboxy, Nitro und Sulfo substituiert sein kann, bevorzugt mindestens eine Sulfogruppe besitzt, oder ein Naphthylrest ist, der durch 1, 2 oder 3 Sulfogruppen substituiert ist.

In den oben genannten allgemeinen Formeln können die einzelnen Formelglieder im Rahmen ihrer Definitionen jeweils zueinander gleiche oder voneinander verschiedene Bedeutungen besitzen.

Solche Schwermetallkomplex-Farbstoffe und deren Synthesewege sind zahlreich aus der Literatur bekannt, wie beispielsweise aus der deutschen Patentschrift Nr. 1 126 542, den deutschen Offenlegungsschriften Nrs. 2 461 481, 2 533 250, 2 634 497, 2 634 856, 2 634 909, 2 016 862, 2 634 787, 2 945 537, 2

655 625, 2 844 597, 2 922 722, 2 945 493, 2 839 562, 2 847 912, 3 124 172, 3 230 102, 3 239 364, 3 337 591 und 3 406 232, den europäischen Patentanmeldungs-Veröffentlichungen Nrs. 0 005 207A, 0 028 787A, 0 070 808A und 0 079 563A, den US-Patentschriften Nrs. 2 817 656, 4 138 395 und 4 544 739, den belgischen Patentschriften Nrs. 828 811, 856 009, 856 579, 871 734, 872 812 und 873 319, den britischen Patentanmeldungs-Veröffentlichungen Nrs. 2 024 236A und 2 031 931A und den schweizerischen Patentschriften Nrs. 634 094 und 639 991.

Die nachfolgenden Beispiele dienen zur Erläuterung der Erfindung. Teile stellen Gewichtsteile dar, und die Prozentangaben beziehen sich auf Gewichtsprozent, sofern nicht anders vermerkt. Volumenteile verhalten sich zu Gewichtsteilen wie Liter zu Kilogramm. Die in den Beispielen beschriebenen Farbstofflösungen enthalten neben dem Farbstoff auch noch weitere aus der Synthese stammende organische und anorganische Bestandteile. Die angegebenen Schwermetallkonzentrationen (in ppm) wurden nach üblichen Methoden photometrisch, potentiometrisch oder mittels Atomabsorptionsspektroskopie bestimmt.

**Beispiel 1**

Es wird von 6000 Teilen einer Farbstofflösung ausgegangen, die 858 Teile des im Beispiel 2 der deutschen Offenlegungsschrift Nr. 2 945 537 beschriebenen Kupferkomplex-Formazanfarbstoffes enthält, einen pH-Wert von 3,8 aufweist und einen ionogenen Kupfergehalt von 824 ppm besitzt.

a) **Fällung mit Natriumsulfid:**

Die Lösung wird auf 70 °C erwärmt, auf einen pH-Wert von 4,0 bis 4,2 mit wenig Natriumcarbonat eingestellt und anschlieBend mit 8,05 Teilen Natriumsulfid (berechnet als 100%ig; eingesetzt bspw. als 13,4 Teile kristallwasserhaltiges 60%iges Natriumsulfid) versetzt, was einem 2,5 mol-%igen Überschuß, bezogen auf die vorhandene Farbstoffmenge, entspricht. Der Ansatz wird mittels eines Essigsäure/Acetatpuffers auf einen pH-Wert zwischen 4,8 und 5,2 gehalten. Man rührt noch 30 Minuten bei 70 °C innerhalb dieses pH-Bereiches nach, setzt sodann 12,5 Teile Kieselgur hinzu, kühlt den Ansatz auf 25 bis 30 °C ab und filtriert ihn. Das Filtrat wird sprühgetrocknet. Das erhaltene Farbstoffpulver weist einen ionogenen Kupfergehalt unter 5 ppm auf; die Farbstoffausbeute liegt über 98%, bezogen auf die Farbstoffmenge der Anfangslösung.

b) **Fällung mit Natriumstearat:**

Die Lösung wird auf 70 °C erwärmt, auf einen pH-Wert von 4,0 bis 4,2 mit wenig Natriumcarbonat eingestellt und anschließend mit 108,8 Teilen Natriumstearat versetzt, was einem 20 mol-%igen Überschuß, bezogen auf die eingesetzte Farbstoffmenge, entspricht. Der Ansatz wird mittels eines Essigsäure/Acetatpuffers auf einen pH-Wert zwischen 4,8 und 5,2 gehalten. Man rührt noch 90 Minuten bei 70 °C innerhalb dieses pH-Bereiches nach, setzt sodann 12,5 Teile Kieselgur hinzu, kühlt den Ansatz auf 25 bis 30 °C ab und filtriert ihn. Das Filtrat wird sprühgetrocknet.

Das erhaltene Farbstoffpulver weist einen ionogenen Kupfergehalt 39 ppm auf; die Farbstoffausbeute liegt über 98%, bezogen auf die Farbstoffmenge der

c) **Fällung mit Trimercapto-s-triazin:**

Die Lösung wird auf 70 °C erwärmt, auf einen pH-Wert von 4,8 bis 5,2 mit wenig Natriumcarbonat eingestellt und anschließend mit 22,3 Teilen Trimercapto-s-triazin versetzt, was einem 7,4 mol-%igen Überschuß, bezogen auf die eingesetzte Farbstoffmenge, entspricht. Der Ansatz wird mittels eines Essigsäure/Acetatpuffers auf einem pH-Wert zwischen 4,8 und 5,2 gehalten und noch 60 Minuten bei 70 °C innerhalb dieses pH-Bereiches nachgerührt, sodann mit 12,5 Teile Kieselgur versetzt, auf 25 bis 30 °C abgekühlt und filtriert. Das Filtrat wird sprühgetrocknet.

Das erhaltene Farbstoffpulver weist einen ionogenen Kupfergehalt unter 5 ppm auf; die Farbstoffausbeute liegt über 98%, bezogen auf die Farbstoffmenge der Anfangslösung.

d) **Fällung mit 2-Amino-benzoesäure:**

Die Lösung wird auf 70 °C erwärmt und auf einen pH-Wert von 5,2 bis 5,5 mit wenig Natriumcarbonat eingestellt, anschließend mit 51,4 Teilen 2-Amino-benzoesäure versetzt, was einem 22 mol-%igen Überschuß, bezogen auf die eingesetzte Farbstoffmenge, entspricht. Der Ansatz wird mittels eines Essigsäure/Acetatpuffers auf einen pH-Wert zwischen 4,8 und 5,2 gehalten und noch 60 Minuten bei 70 °C innerhalb dieses pH-Bereiches nachgerührt, sodann mit 12,5 Teile Kieselgur versetzt, auf 25 bis 30 °C abgekühlt und filtriert. Das Filtrat wird sprühgetrocknet.

Das erhaltene Farbstoffpulver weist einen ionogenen Kupfergehalt 24 ppm auf; die Farbstoffausbeute liegt über 98%, bezogen auf die Farbstoffmenge der Anfangslösung.

e) **Fällung mit 8-Hydroxy-chinolin:**

Die Lösung wird auf 70 °C erwärmt und auf einen pH-Wert von 4,8 bis 5,2 mit wenig Natriumcarbonat eingestellt, anschließend mit 47,7 Teilen 8-Hydroxy-chinolin versetzt, was einem 17,3 mol-%igen Überschuß, bezogen auf die eingesetzte Farbstoffmenge, entspricht. Der Ansatz wird mittels eines Essigsäure/Acetatpuffers auf einen pH-Wert zwischen 4,8 und 5,2 gehalten und noch 60 Minuten bei 70 °C innerhalb dieses pH-Bereiches nachgerührt, sodann mit 12,5 Teile Kieselgur versetzt, auf 25 bis 30 °C abgekühlt und filtriert. Das Filtrat wird sprühgetrocknet. Das erhaltene Farbstoffpulver weist einen ionogenen Kupfergehalt unter 5 ppm auf; die Farbstoffausbeute liegt über 98%, bezogen auf die Farbstoffmenge der Anfangslösung.

**Beispiele 2 bis 5**

Die in den nachfolgenden Beispielen 2 bis 5 beschriebenen erfindungsgemäßen Fällungsreaktionen werden im wesentlichen analog den Ausführungsformen des Beispieles 1 durchgeführt, so daß sich eine wörtliche Wiedergabe erübrigt und die entsprechenden Angaben tabellarisch aufgelistet werden können. In den Unterbeispielen a) bis e) wurden folgende Fällungsmittel eingesetzt:

in den Bsp. a: Natriumsulfid (auf 100%ig berechnet)
in den Bsp. b: Natriumstearat
in den Bsp. c: Trimercapto-s-triazin
in den Bsp. d: 2-Amino-benzoesäure
in den Bsp. e: 8-Hydroxy-chinolin .

Unter der Rubrik "Teile an Fällungsm." gibt die in Klammern befindliche Zahl die eingesetzte überschüssige Menge, bezogen auf die Farbstoffmenge, an; die zum Metallion äquivalente Menge errechnet sich demgemäß aus der Differenz der beiden angegebenen Zahlenwerte.
Die Farbstoffausbeute des praktisch Metallionen-freien Endfarbstoffes beträgt, bezogen auf die Farbstoffmenge der jeweiligen Ausgangslösung, in allen Fällen über 98 %.

**Beispiel 2**

Man geht von 6000 Teilen einer Farbstofflösung aus, die 797 Teile des im Beispiel 33 der deutschen Offenlegungsschrift Nr. 2 016 862 beschriebenen Kupferkomplex-Monoazofarbstoffes enthält, einen pH-Wert von 4,7 aufweist und einen ionogenen Kupfergehalt von 431 ppm besitzt.

**Beispiel 3**

Man geht von 10000 Teilen einer wäßrigen Farbstofflösung aus, die 1047 Teile des in der US-PS 2 817 656 beschriebenen Kupferkomplex-Disazofarbstoffes (mit der Colour Index Nr. C.I. 23155) enthält, einen pH-Wert von 4,5 aufweist und einen ionogenen Kupfergehalt von 522 ppm besitzt.

**Beispiel 4**

Man geht von 10000 Teilen einer wäßrigen Farbstofflösung aus, die 1374 Teile des im Beispiel 4 der deutschen Offenlegungsschrift Nr. 2 824 211 beschriebenen Nickelphthalocyaninfarbstoffes enthält, einen pH-Wert von 4,3 aufweist und einen ionogenen Nickelgehalt von 238 ppm besitzt.

**Beispiel 5**

Man geht von 6000 Teilen einer wäßrigen Farbstofflösung aus, die 654 Teile des in Colour Index unter Nr. C.I. 11640 genannten 1:2-Kobaltkomplex-Azofarbstoffes enthält, einen pH-Wert von 6,8 aufweist und einen ionogenen Kobaltgehalt von 315 ppm besitzt.

| Bsp. | Teile an Fällungsm. | T (°C) | Fällungsbedingungen pH | Puffer | Zeit | Ionogener Metallgehalt im Endfarbstoff |
|---|---|---|---|---|---|---|
| 2a | 7,5 ( 4,3) | 25-30 | 4,8-5,2 | Acetat | 30 min | 6 ppm |
| 2b | 86,1 (61,2) | 70-75 | 4,8-5,2 | Acetat | 90 min | 41 ppm |
| 2c | 9,2 ( 4,4) | 40-45 | 6,2-6,5 | Acetat | 30 min | 10 ppm |
| 2d | 34,4 (23,3) | 70-75 | 4,8-5,2 | Acetat | 60 min | 18 ppm |
| 2e | 33,6 (21,8) | 70-75 | 4,8-5,2 | Acetat | 60 min | 15 ppm |
| 3a | 10,3 ( 3,9) | 25-30 | 6,0-6,5 | Bicarbonat | 30 min | < 5 ppm |
| 3b | 126,8 (76,5) | 70-75 | 4,8-5,2 | Acetat | 90 min | 41 ppm |
| 3c | 14,1 ( 4,4) | 25-30 | 7,5-8,0 | Bicarbonat | 45 min | < 5 ppm |
| 3d | 43,1 (20,6) | 70-75 | 6,0-6,5 | Bicarbonat | 60 min | 25 ppm |
| 3e | 49,9 (24,7) | 70-75 | 6,5-6,7 | Bicarbonat | 60 min | 22 ppm |
| 4a | 5,2 ( 2,0) | 25-30 | 4,8-5,2 | Acetat | 30 min | < 5 ppm |
| 4b | 86,0 (61,2) | 70-75 | 4,8-5,2 | Acetat | 90 min | 36 ppm |
| 4c | 13,6 ( 8,8) | 40-45 | 5,2-5,5 | Acetat | 45 min | 10 ppm |
| 4d | 31,6 (20,5) | 70-75 | 4,8-5,2 | Acetat | 60 min | 12 ppm |
| 4e | 33,6 (21,8) | 70-75 | 4,8-5,2 | Acetat | 60 min | 18 ppm |
| 5a | 4,5 ( 2,0) | 60-65 | 7,0-7,5 | Bicarbonat | 30 min | < 5 ppm |
| 5b | 80,8 (61,2) | 70-75 | 4,8-5,2 | Acetat | 90 min | 52 ppm |
| 5c | 12,7 ( 8,9) | 40-45 | 7,5-8,0 | Bicarbonat | 45 min | < 5 ppm |
| 5d | 36,2 (27,4) | 70-75 | 7,0-7,5 | Bicarbonat | 60 min | 25 ppm |
| 5e | 38,3 (29,0) | 70-75 | 7,0-7,5 | Bicarbonat | 60 min | 18 ppm |

**Beispiele 6a bis 6q**

Man geht jeweils von 6000 Teilen einer Farbstofflösung aus, die 858 Teile des im Beispiel 2 der deutschen Offenlegungsschrift Nr. 2 945 357 beschriebenen Kupferkomplex-Formazanfarbstoffes enthält,

einen pH-Wert von 3,8 aufweist und einen ionogenen Kupfergehalt von 824 ppm besitzt.
Die Lösung wird auf 70 °C erwärmt und auf einen pH-Wert von 4,0 bis 4,2 mit wenig Natriumcarbonat eingestellt, anschließend mit dem in dem jeweiligen Tabellenbeispiel angegebenen Fällungsreagenz versetzt, mittels eines Essigsäure/Acetatpuffers auf einen pH-Wert zwischen 5,0 und 5,5 gehalten, noch 60 Minuten bei 70 bis 75 °C innerhalb dieses pH-Bereiches nachgerührt, sodann mit 12,5 Teile Kieselgur versetzt, auf 25 bis 30 °C abgekühlt und filtriert. Das Filtrat wird sprühgetrocknet.
Das erhaltene Farbstoffpulver weist den in dem jeweiligen Tabellenbeispiel angegebenen ionogenen Kupfergehalt auf; die Farbstoffausbeute betrug jeweils über 98%, bezogen auf die Farbstoffmenge der Anfangslösung.

| Bsp. | Fällungsreagenz | eingesetzte Menge davon | Endgehalt an $Cu^{2(+)}$ |
|---|---|---|---|
| 6a | Stearinsäure | 105,4 Teile | 28 ppm |
| 6b | Palmitinsäure | 91,0 Teile | 34 ppm |
| 6c | Myristinsäure | 85,7 Teile | 41 ppm |
| 6d | Laurinsäure | 81,1 Teile | 43 ppm |
| 6e | Caprinsäure | 69,8 Teile | 25 ppm |
| 6f | Octansäure | 65,6 Teile | 36 ppm |
| 6g | Isodecansäure | 67,0 Teile | 54 ppm |
| 6h | Isononansäure | 71,0 Teile | 71 ppm |
| 6j | 2-Ethyl-hexansäure | 69,0 Teile | 89 ppm |
| 6k | Ölsäure | 102,0 Teile | 112 ppm |
| 6m | Natriumoleat | 110,0 Teile | 123 ppm |
| 6n | Malonsäure | 39,0 Teile | 132 ppm |
| 6p | 1:1-Mischung aus den Mono- und Dilaurylestern der Orthophosphorsäure | 118,0 Teile | 45 ppm |
| 6q | 1:1-Mischung aus den Mono- und Distearylestern der Orthophosphorsäure | 111,3 Teile | 51 ppm |

## Patentansprüche

1. Verfahren zur Verminderung von Schwermetallionen bei der Synthese von wasserlöslichen Schwermetallkomplex-Farbstoffen, dadurch gekennzeichnet, daß man die Entfernung der überschüssigen Schwermetallionen aus der Syntheselösung mit Hilfe einer oder mehrerer Verbindungen aus der nachstehenden Gruppe von Verbindungen in der angegebenen Menge durchführt:

   a) gesättigte und ungesättigte Fettsäuren mit etwa 8 bis 18 C-Atomen und deren wasserlöslichen Salze, bevorzugt Alkalimetallsalze, in äquimolarer Menge zur Menge der in der Lösung vorhandenen Schwermetallionen und zusätzlich einem Überschuß von 0,01 bis 0,25 Mol, bezogen auf 1 Mol Farbstoff;

   b) die Mono- und Diester der Orthophosphorsäure und deren wasserlöslichen Salze entsprechend den allgemeinen Formeln (1a) und (1b)

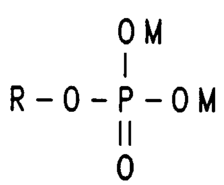 (1a)

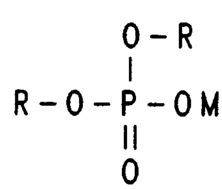 (1b)

   in welchen R einen gesättigten oder ungesättigten aliphatischen Rest, bevorzugt einen Alkylrest, mit etwa 8 bis 18 C-Atomen bedeutet, wobei die beiden R in Formel (1b) zueinander gleich oder voneinander verschieden sein können, und M für ein Wasserstoffatom oder ein salzbildendes, Wasserlöslichkeit bewirkendes Metall steht, bevorzugt ein Alkalimetall ist, in äquimolarer Menge zur Menge der in der Lösung vorhandenen Schwermetallionen und zusätzlich einem Überschuß von 0,01 bis 0,3 Mol, bezogen auf 1 Mol Farbstoff;

c) aliphatische Sulfonsäuren und deren wasserlöslichen Salze entsprechend der allgemeinen Formel (2)

$R\text{-}SO_3M$ (2)

in welcher R und M die obengenannten Bedeutungen haben, in äquimolarer Menge zur Menge der in der Lösung vorhandenen Schwermetallionen und zusätzlich einem Überschuß von 0,01 bis 0,3 Mol, bezogen auf 1 Mol Farbstoff;

d) aliphatische Phosphonsäuren und deren Monoester sowie deren wasserlösliche Salze entsprechend den allgemeinen Formeln (3a) und (3b)

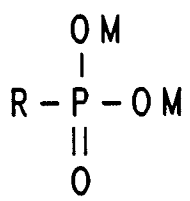

(3a)

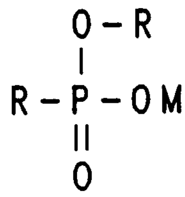

(3b)

in welchen R und M die obengenannten Bedeutungen haben, wobei die R zueinander gleiche oder voneinander verschiedene Bedeutungen besitzen können, in äquimolarer Menge zur Menge der in der Lösung vorhandenen Schwermetallionen und zusätzlich einem Überschuß von 0,01 bis 0,3 Mol, bezogen auf 1 Mol Farbstoff;

e) Malonsäure und deren wasserlöslichen Salze, insbesondere Alkalimetallsalze, wie Natrium- und Kaliumsalze, in äquimolarer Menge zur Menge der in der Lösung vorhandenen Schwermetallionen und zusätzlich einem Überschuß von 0,01 bis 0,3 Mol, bezogen auf 1 Mol Farbstoff;

f) Trimercapto-s-triazin, 2-Amino-benzoesäure, 8-Hydroxy-chinolin und die wasserlöslichen Salze dieser Verbindungen, insbesondere deren Alkalimetallsalze, bevorzugt Natriumsalze, in äquimolarer Menge zur Menge der in der Lösung vorhandenen Schwermetallionen und zusätzlich einem Überschuß von 0,01 bis 0,25 Mol, bezogen auf 1 Mol Farbstoff;

g) wasserlösliche Sulfide, insbesondere Alkalimetallsulfide, bevorzugt Natriumsulfid, in äquimolarer Menge zur Menge der in der Lösung vorhandenen Schwermetallionen und zusätzlich einem Überschuß von 0,01 bis 0,1 Mol, bezogen auf 1 Mol Farbstoff.

**2.** Verfahren nach Anspruch 1, dadurch gekennzeichnet, daß man eine Verbindung oder mehrere solcher Verbindungen aus der angegebenen Gruppe von Verbindungen (a) bis (g) zur Farbstofflösung hinzugibt und das ausgefallene Schwermetallsalz dieser Verbindung(en) aus der Farbstofflösung abtrennt.

**3.** Verfahren nach Anspruch 1 oder 2, dadurch gekennzeichnet, daß das Fällungsreagenz gemäß der Verbindungen a) Stearinsäure, Palmitinsäure, Myristinsäure, Laurinsäure, Caprinsäure, Octansäure, Isodecansäure, Isononansäure, 2-Ethyl-hexansäure oder Ölsäure oder deren Alkalimetallsalze ist.

**4.** Verfahren nach Anspruch 3, dadurch gekennzeichnet, daß das Fällungsreagenz Stearinsäure und/oder Natriumstearat ist.

**5.** Verfahren nach Anspruch 1 oder 2, dadurch gekennzeichnet, daß in den Verbindungen b), c) und d) der Rest R der Stearyl-, Palmityl-, Myristyl-, Lauryl-, Decyl-, Octyl-, Isodecyl-, Isononyl-, 2-Ethyl-hexyl- oder Oleyl-Rest ist.

**6.** Verfahren nach Anspruch 1 oder 2, dadurch gekennzeichnet, daß das Fällungsreagenz gemäß den Verbindungen der Gruppe b) ein Gemisch aus den Mono- und Dilaurylestern der Orthophosphorsäure und/oder deren Alkalimetallsalze ist.

**7.** Verfahren nach Anspruch 1 oder 2, dadurch gekennzeichnet, daß das Fällungsreagenz Natriumsulfid ist.

**8.** Verfahren nach Anspruch 1 oder 2, dadurch gekennzeichnet, daß das Fällungsreagenz 2-Amino-benzoesäure ist.

**9.** Verfahren nach Anspruch 1 oder 2, dadurch gekennzeichnet, daß das Fällungsreagenz Trimercapto-s-triazin ist.

**10.** Verfahren nach Anspruch 1 oder 2, dadurch gekennzeichnet, daß das Fällungsreagenz 8-Hydroxychinolin ist.

**11.** Verfahren nach mindestens einem der Ansprüche 1 bis 10, dadurch gekennzeichnet, daß man die Fällungsreaktion bei einem pH-Wert zwischen 4 und 7 durchführt.

## Claims

**1.** Process for the reduction of heavy metal ions in the synthesis of water-soluble heavy metal complex dyes, characterized by the fact that removal of the excess heavy metal ions from the synthesis solution is accomplished with the aid of one or more compounds from the following group of compounds in the specified quantity:

a) saturated and unsaturated fatty acids with approximately 8 to 18 C atoms and their water-soluble salts, preferably alkali metal salts, in an amount in equimolar proportion to the amount of heavy metal ions present in the solution and additionally in an excess of 0.01 to 0.25 mol relative to 1 mol of dye;

b) the mono- and diesters of orthophosphoric acid and its water-soluble salts conforming to the general formulae (1a) and (1b)

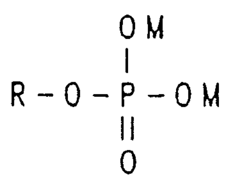 (1a) 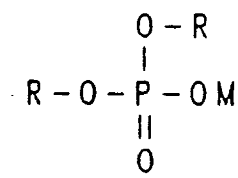 (1b)

in which R is a saturated or unsaturated aliphatic radical, preferably an alkyl radical, with approximately 8 to 18 C atoms, where the two Rs in formula (1b) may be identical or different, and M denotes a hydrogen atom or a salt-forming, water-solubilizing metal, preferably an alkali metal, in an amount in equimolar proportion to the amount of heavy metal ions present in the solution and additionally in an excess of 0.01 to 0.3 mol relative to 1 mol of dye;

c) aliphatic sulphonic acids and their water-soluble salts conforming to the general formula (2)

$R{-}{-}SO_3M$ (2)

in which R and M have the above-mentioned meanings, in an amount in equimolar proportion to the amount of heavy metal ions present in the solution and additionally in an excess of 0.01 to 0.3 mol relative to 1 mol of dye;

d) aliphatic phosphonic acids and their monoesters as well as their water-soluble salts conforming to the general formulae (3a) and (3b)

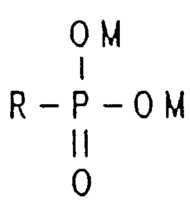 (3a) 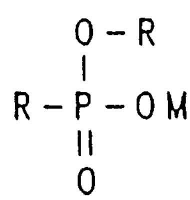 (3b)

in which R and M have the above-mentioned meanings, where the Rs may have identical or different meanings, in an amount in equimolar proportion to the amount of heavy metal ions present in the solution and additionally in an excess of 0.01 to 0.3 mol relative to 1 mol of dye;

e) malonic acid and its water-soluble salts, particularly alkali metal salts, such as sodium and potassium salts, in an amount in equimolar proportion to the amount of heavy metal ions present in the solution and additionally in an excess of 0.01 to 0.3 mol relative to 1 mol of dye;

f) trimercapto-s-triazine, 2-aminobenzoic acid, 8-hydroxyquinoline and the water-soluble salts of these compounds, particularly their alkali metal salts,
preferably sodium salts, in an amount in equimolar proportion to the amount of heavy metal ions present in the solution and additionally in an excess of 0.01 to 0.25 mol relative to 1 mol of dye;
g) water-soluble sulfides, particularly alkali metal sulfides, preferably sodium sulfide, in an amount in equimolar proportion to the amount of heavy metal ions present in the solution and additionally in an excess of 0.01 to 0.1 mol relative to 1 mol of dye.

**2.** Process according to claim 1, characterized by the fact that one or more compounds from the specified group of compounds (a) to (g) is/are added to the dye solution and the precipitated heavy metal salt of this compound or these compounds is removed from the dye solution.

**3.** Process according to claim 1 or 2, characterized by the fact that the precipitating agent according to compounds (a) is stearic acid, palmitic acid, myristic acid, lauric acid, caproic acid, octanoic acid, isodecanoic acid, isononanoic acid, 2-ethylhexanoic acid or oleic acid or their alkali metal salts.

**4.** Process according to claim 3, characterized by the fact that the precipitating agent is stearic acid and/or sodium stearate.

**5.** Process according to claim 1 or 2, characterized by the fact that in compounds (b), (c) and (d) the radical R is the stearyl, palmityl, myristyl, lauryl, decyl, octyl, isodecyl, isononyl, 2-ethylhexyl or oleyl radical.

**6.** Process according to claim 1 or 2, characterized by the fact that the precipitating agent according to compounds of the (b) group is a mixture of the mono- and dilauryl esters of orthophosphoric acid and/or its alkali metal salts.

**7.** Process according to claim 1 or 2, characterized by the fact that the precipitating agent is sodium sulfide.

**8.** Process according to claim 1 or 2, characterized by the fact that the precipitating agent is 2-aminobenzoic acid.

**9.** Process according to claim 1 or 2, characterized by the fact that the precipitating agent is trimercapto-s-triazine.

**10.** Process according to claim 1 or 2, characterized by the fact that the precipitating agent is 8-hydroxyquinoline.

**11.** Process according to at least one of claims 1 to 10, characterized by the fact that the precipitation reaction is carried out at a pH of between 4 and 7.

**Revendications**

**1.** Procédé pour la réduction de la teneur en ions de métaux lourds dans la synthèse de colorants à complexe de métaux lourds hydrosolubles, caractérisé en ce qu'on met en oeuvre l'élimination de l'excès en ions de métaux lourds de la solution de synthèse à l'aide d'un ou plusieurs composés pris parmi les composés ci-après en la quantité indiquée :
a) les acides gras saturés et insaturés avec d'environ 8 à 18 atomes de carbone et leurs sels hydrosolubles, de préférence les sels de métaux alcalins, en quantité équimolaire par rapport à la quantité des ions de métaux lourds présents dans la solution et de plus, dans un excès de 0,01 à 0,25 mole par rapport à 1 mole de colorant ;
b) les mono- et diesters de l'acide orthophosphorique et leurs sels hydrosolubles répondant aux formules générales (1a) et (1b) :

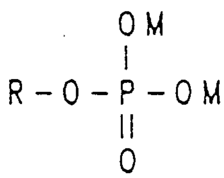 (1a)

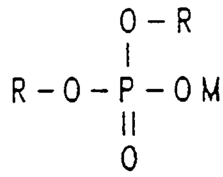 (1b)

dans lesquelles R représente un radical aliphatique saturé ou insaturé, de préférence un radical alkyle avec d'environ 8 à 18 atomes de carbone, les deux radicaux R dans le formule (1b) pouvant être identiques ou différents l'un par rapport à l'autre, et M représentant un atome d'hydrogène ou un métal hydrosolubilisant salifiant, de préférence un métal alcalin, en quantité équimolaire par rapport à la quantité d'ions de métaux lourds présents dans la solution et de plus, avec un excès de 0,01 à 0,3 mole par rapport à 1 mole de colorant ;
c) les acides sulfoniques aliphatiques et leurs sels hydrosolubles répondant à la formule générale (2) :

$R\text{-}SO_3M$ (2)

dans laquelle R et M ont les significations données ci-dessus, en quantité équimolaire par rapport à la quantité d'ions de métaux lourds présents dans la solution et, de plus, avec un excès de 0,01 à 0,3 mole par rapport à 1 mole de colorant ;
d) les acides phosphoniques aliphatiques et leurs monoesters ainsi que leurs sels hydrosolubles répondant aux formules générales (3a) et (3b) :

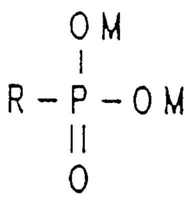 (3a)

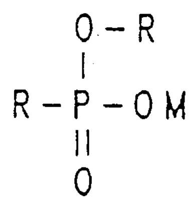 (3b)

dans lesquelles R et M ont les significations données ci-dessus, les radicaux R pouvant avoir des significations identiques ou différentes l'un par rapport à l'autre, en quantité équimolaire par rapport à la quantité d'ions de métaux lourds présents dans la solution et de plus, avec un excès de 0,01 à 0,3 mole par rapport à 1 mole de colorant ;
e) l'acide malonique et ses sels hydrosolubles, plus particulièrement les sels de métaux alcalins comme les sels de sodium et de potassium, en quantité équimolaire par rapport à la quantité d'ions de métaux lourds présents dans la solution et de plus, avec un excès de 0,01 à 0,3 mole par rapport à 1 mole de colorant ;
f) la trimercapto-s-triazine, l'acide 2-amino-benzoïque, la 8-hydroxy-quinoléine et les sels hydrosolubles de ces composés, plus particulièrement leurs sels de métaux alcalins, de préférence les sels de sodium, en quantité équimolaire par rapport à la quantité d'ions de métaux lourds présents dans la solution et de plus, avec un excès de 0,01 à 0,25 mole par rapport à 1 mole de colorant ;
g) les sulfures hydrosolubles, plus particulièrement les sulfures de métaux alcalins, de préférence le sulfure de sodium, en quantité équimolaire par rapport à la quantité d'ions de métaux lourds présents dans la solution et de plus, avec un excès de 0,01 à 0,1 mole par rapport à 1 mole de colorant.

**2.** Procédé selon la revendication 1, caractérisé en ce qu'on ajoute à la solution du colorant un composé ou plusieurs de tels composés pris dans le groupe indiqué des composés (a) à (g) et on sépare le sel de métal lourd de ce(s) composé(s) de la solution du colorant.

**3.** Procédé selon la revendication 1 ou 2, caractérisé en ce que le réactif de précipitation selon les composés a) est l'acide stéarique, l'acide palmitique, l'acide myristique, l'acide laurique, l'acide caprique, l'acide octanoïque, l'acide isodécanoïque, l'acide isononanoïque, l'acide 2-éthyl-hexanoïque ou l'acide oléïque ou leurs sels de métaux alcalins.

4. Procédé selon la revendication 3, caractérisé en ce que le réactif de précipitation est l'acide stéarique et/ou le stéarate de sodium.

5. Procédé selon la revendication 1 ou 2, caractérisé en ce que dans les composés b), c) et d) le radical R est le radical stéaryle, palmityle, myristyle, lauryle, décyle, octyle, isodécyle, isononyle, 2-éthylhexyle ou oléyle.

6. Procédé selon la revendication 1 ou 2, caractérisé en ce que le réactif de précipitation conformément aux composés du groupe b) est un mélange des esters mono- et dilauriques de l'acide orthophosphorique et/ou de leurs sels de métaux alcalins.

7. Procédé selon la revendication 1 ou 2, caractérisé en ce que le réactif de précipitation est le sulfure de sodium.

8. Procédé selon la revendication 1 ou 2, caractérisé en ce que le réactif de précipitation est l'acide 2-amino-benzoïque.

9. Procédé selon la revendication 1 ou 2, caractérisé en ce que le réactif de précipitation est la trimercapto-s-triazine.

10. Procédé selon la revendication 1 ou 2, caractérisé en ce que le réactif de précipitation est la 8-hydroxy-quinoléine.

11. Procédé selon au moins l'une des revendications 1 ou 10, caractérisé en ce qu'on met en oeuvre la réaction de précipitation à une valeur de pH comprise entre 4 et 7.